(19) Europäisches Patentamt
European Patent Office
Office européen des brevets

(11) **EP 4 596 911 A1**

(12) **EUROPEAN PATENT APPLICATION**
published in accordance with Art. 153(4) EPC

(43) Date of publication:
06.08.2025 Bulletin 2025/32

(51) International Patent Classification (IPC):
**F16C 33/62** (2006.01) **F16C 19/06** (2006.01)
**F16C 19/26** (2006.01)

(21) Application number: 23872409.0

(22) Date of filing: 27.09.2023

(52) Cooperative Patent Classification (CPC):
**F16C 19/06; F16C 19/26; F16C 33/62**

(86) International application number:
**PCT/JP2023/035125**

(87) International publication number:
**WO 2024/071187 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.09.2022 JP 2022155569

(71) Applicant: **NTN Corporation**
**Osaka-shi Osaka 530-0005 (JP)**

(72) Inventors:
• **KUNIKATA Yusuke**
**Kuwana-shi, Mie 511-8678 (JP)**
• **NISHIKAWA Takashi**
**Kuwana-shi, Mie 511-8678 (JP)**

(74) Representative: **Henkel & Partner mbB**
**Patentanwaltskanzlei, Rechtsanwaltskanzlei**
**Maximiliansplatz 21**
**80333 München (DE)**

(54) **INSULATED ROLLING BEARING**

(57) Provided is an insulated rolling bearing having an insulating coating on the outer peripheral surface of an outer ring or another such location, the insulated rolling bearing being exceptional in terms of properties for preventing electrolytic corrosion. This insulating rolling bearing 1 comprises an inner ring 2, an outer ring 3, raceway surfaces that are formed on the outer peripheral surface of the inner ring 2 and the inner peripheral surface of the outer ring 3, and a plurality of balls 4 that are interposed between the raceway surfaces, the outer peripheral surface 3a of the outer ring 3 having a resin coating 6 (insulating coating), and the resin coating 6 in the insulated rolling bearing 1 being composed of a resin composition having an insulation resistance value of 2000 MΩ or greater and a capacitance of 10 nF or lower, the resin composition containing a polyphenylene sulfide resin, glass fibers, an inorganic filler having a thermal conductance of 10 W/m·K or greater, and a thermoplastic elastomer.

Fig.1

EP 4 596 911 A1

**Description**

TECHNICAL FIELD

The present invention relates to an insulating rolling bearing, in particular, an insulating rolling bearing used in a device having a structure where electric current possibly flows in the bearing when in use, such as a general motor, a generator, and a traction motor for railway vehicles.

BACKGROUND ART

For example, in a rolling bearing used in a traction motor for railway vehicles, an electric discharge is caused between a rolling element and an outer ring raceway surface or between the rolling element and an inner ring raceway surface, which might cause an electrolytic corrosion therein. Also in a bearing used in other device having a structure where electric current possibly flows in the bearing, such as a generator, similar electrolytic corrosion might be caused.

Conventionally, a technique for preventing such electrolytic corrosion has been known that a resin film is formed on an outer surface of a raceway ring of a bearing. For example, Patent Document 1 discloses an insulating rolling bearing having a resin film formed by a resin composition containing a glass fiber and a filler having the specific electrical resistance of $1 \times 10^{10}\,\Omega\cdot$cm or more and the heat conductivity of 10 W/m·K or more. The filler is used for improving the heat dissipating performance of the resin film. Examples of the filler include powder and fiber of SiC (silicon carbide), AlN (aluminum nitride), BeO (beryllia), BN (boron nitride), or $Al_2O_3$ (alumina). Further, Patent Document 1 discloses that the total content of the glass fiber and the filler is 20-60 mass% and the content of the filler is 10-40 mass%.

Further, Patent Document 2 discloses an insulating rolling bearing for preventing electrolytic corrosion that has a ceramic insulating film formed by alumina, as a main component, having the insulation resistance of 1,000 MΩ or more and the capacitance of 27 nF or less.

PRIOR ART DOCUMENTS

PATENT DOCUMENTS

**[0005]**

　　　Patent Document 1: JP 2004-218846 A
　　　Patent Document 2: JP 2007-333031 A

SUMMERY OF THE INVENTION

PROBLEMS TO BE SOLVED BY THE INVENTION

Generally, the traction motor for railway vehicles is driven by means of invertor control. In recent years, in order to reduce noise in switching in the traction motor, a carrier frequency is tend to be high and thus high frequency electric current flows in the rolling bearing. In order to prevent the electrolytic corrosion, an insulation material such as ceramics may be employed as the rolling element, however the cost might increase.

As a technique that enhances the insulating performance of the bearing without employing the insulation material in a component of the bearing, a rolling bearing having an insulating film on a surface of a metal component has been known as disclosed in Patent Documents 1 and **2.** However, in further continuous proceeding of high performance of the traction motor, it is desired to sufficiently secure the insulating performance also in the traction motor driven at a higher carrier frequency.

An object of the present invention is, in order to solve such problems, to provide an insulating rolling bearing that has insulating film on an outer peripheral surface of an outer ring or the like, and has superior electrolytic corrosion preventive performance.

MEANS FOR SOLVING THE PROBLEM

An insulating rolling bearing of the present invention includes an inner ring, an outer ring, a raceway surface that is formed on each of an outer peripheral surface of the inner ring and an inner peripheral surface of the outer ring, rolling elements that are interposed between the raceway surfaces, and an insulating film that is formed of a resin film or a ceramics film. The insulating film is formed on at least one peripheral surface selected from the group of an inner peripheral surface of the inner ring and an outer peripheral surface of the outer ring. The insulating film of the insulating rolling bearing has the insulation resistance of 2,000 MΩ or more and the capacitance of 10 nF or less.

Here, the insulation resistance R of the insulating film of the insulating rolling bearing is calculated by the following formula (1).

Math 1

$$Z = \frac{1}{\sqrt{\frac{1}{R^2} + (2\pi f C)^2}} \quad (1)$$

Z: impedance (Ω)
R: insulation resistance (Ω)
f: frequency (Hz)
C: capacitance (F)

In the above-described formula (1), the frequency corresponds to a carrier frequency in which the insulating rolling bearing is used, or the frequency of the electric current that flows in the rolling bearing. Further, the impedance Z is measured from the phase difference between the current waveform and the voltage waveform under a measurement condition of, for example, load voltage of 1 V using the LCR meter after the bearing outer ring is assembled to a jig such that the whole peripheral surface of the bearing outer ring is in contact with the jig.

The insulation resistance R is generally calculated by the following formula (2).

Math 2

$$R = \rho \frac{l}{A} \quad (2)$$

$\rho$: electric resistivity (Ω·m)
l: length (m)
A: sectional area (m$^2$)

In the above-described formula (2), the electric resistivity $\rho$ of the insulating film is a parameter determined based on the selected material. Further, the length l corresponds to the film thickness (the distance d in the following formula (3)). The sectional area A corresponds to the area S in the following formula (3).

The capacitance C of the insulating film of the insulating rolling bearing is calculated by the following formula (3).

Math 3

$$C = \frac{\varepsilon_0 \varepsilon_s S}{d} \quad (3)$$

$\varepsilon_0$: vacuum permittivity (8.8542 × 10$^{-12}$ (F/m))
$\varepsilon_s$: relative permittivity of the insulating film
S: area (m$^2$)
d: distance (m)

In the above-described formula (3), the relative permittivity $\varepsilon_s$ of the insulating film is a parameter determined based on the selected material. Further, the area S corresponds to a surface area of the raceway ring on which the insulating film is formed. The distance d corresponds to the film thickness of the insulating film.

The insulating film may be formed of the resin film, and the resin film may be formed of a resin composition that contains a polyphenylene sulfide (PPS) resin, a glass fiber, an inorganic filler having the heat conductivity of 10 W/m·K or more, and a thermoplastic elastomer.

The content of the thermoplastic elastomer may be 1-10 mass% relative to the whole of the resin composition.

The content of the total of the glass fiber and the inorganic filler may be 40-70 mass% relative to the whole of the resin composition. The resin composition may contain the inorganic filler more than the glass fiber, and 10-30 mass% of the glass fiber and 30-50 mass% of the inorganic filler relative to the whole of the resin composition.

The inorganic filler may be at least one selected from the group of silicon carbide, beryllia, boron nitride, silicon nitride, magnesium hydroxide, alumina, and magnesium carbonate.

The resin film may be formed on the peripheral surface and both axial end surfaces of a raceway ring. The film thickness of the resin film on the peripheral surface may be 1 mm or less. A ratio of the film thickness of the resin film on the peripheral surface to the film thickness of the resin film on the axial end surface may be in a range between 1 : 1 and 1 : **3.**

A flowing direction of a resin in the resin film may be directed along one side to the other side in an axial direction of the peripheral surface on the whole circumference of a raceway ring.

The insulating film may include a ceramics film, and the film thickness of the insulating film may be **0.1-1.0 mm.**

The insulating rolling bearing may be configured as a bearing that rotatably supports a main shaft of a traction motor of a railway vehicle.

EFFECT OF THE INVENTION

The insulating rolling bearing of the present invention includes the insulating film that is formed of a resin film or a ceramics film on at least one peripheral surface selected from the group of the inner peripheral surface of the inner ring and the outer peripheral surface of the outer ring, and the insulating film of the insulating rolling bearing has the insulation resistance of 2,000 MΩ or more and the capacitance of 10 nF or less. As shown by the above-described formula (1), the impedance becomes lower as the carrier frequency is larger, however the insulation resistance and the capacitance are set as described above, so that high impedance (for example, 10 Ω or more) can be realized even in the traction motor driven at a high carrier frequency (for example, 1,000 Hz). Accordingly, superior electrolytic corrosion preventive performance can be realized.

The insulating film is formed of the resin film, and the resin film is formed of the resin composition that contains at least the PPS resin, the glass fiber, the inorganic filler having the heat conductivity of 10 W/m·K or more, and the thermoplastic elastomer. Accordingly, the heat dissipating performance of the insulating film can be improved while maintaining the insulating performance thereof. Further, the deterioration of the moldability caused by compounding the inorganic filler (high heat conductivity material) can be suppressed by the thermoplastic elastomer. Further, the improvement of the heat dissipating performance of the resin film can suppress the increase of the temperature of the bearing and can set the film thickness of the resin film to be large. As a result, the capacitance can be decreased, and the high impedance can be realized.

The resin film is formed on the peripheral surface and both axial end surfaces of a raceway ring. The resin film has a portion having the film thickness of 1 mm or less on the peripheral surface. The ratio of the film thickness of the resin film on the peripheral surface to the film thickness of the resin film on the axial end surface is in a range between 1 : 1 and 1 : 3. Accordingly, the resin film on the peripheral surface shows the heat dissipating performance and the resin film on the axial end surface leads to the high impedance, so that superior balance between the heat dissipating performance and the insulating performance can be realized.

The content of the thermoplastic elastomer is 1-10 mass% relative to the whole of the resin composition. Accordingly, the flowability of the resin composition in molding and the impact resistance of the resin film can be improved while suppressing the deterioration of the elastic modulus. Further, the content of the total of the glass fiber and the inorganic filler is 40-70 mass% relative to the whole of the resin composition. Accordingly, further superior heat dissipating performance and mechanical strength of the resin film can be realized.

The flowing direction of the resin in the resin film is directed along one side to the other side in the axial direction of the peripheral surface on the whole circumference of the raceway ring. Namely, the orientation of the resin is directed in a specified direction (a direction from one side toward the other side in the axial direction) on the whole circumference of the raceway ring. In this case, the resin film is formed by injection-molding the molten resin from the whole circumference of the molding cavity at the same time, so that a weld portion is not formed in the resin film. As a result, a local defect in strength of the resin film is hardly caused, and thus the mechanical strength can be further improved.

The insulating film is a ceramics film, and the ceramics film contains alumina as a main component. Further, the film thickness of the ceramics film is **0.1-1.0 mm.** Accordingly, the capacitance can be deceased, and further higher impedance can be realized.

The insulating rolling bearing of the present invention can realize the high impedance and can suppress the electrolytic corrosion of the bearing. Thus, the insulating rolling bearing of the present invention is suitably used as a bearing that rotatably supports a main shaft of a traction motor of a railway vehicle, and thus the reliability of the traction motor for railway vehicles can be improved and a maintenance man-hour power and the cost can be decreased.

BRIEF DESCRIPTION OF THE DRAWINGS

Fig. 1 is an enlarged sectional view illustrating one example of an insulating rolling bearing of the present invention. Figs. 2 (a) and 2 (b) are sectional views illustrating main portions of a molding die for performing insert molding onto an outer ring shown in Fig. 1.

Fig. 3 is an enlarged sectional view illustrating another example of the insulating rolling bearing of the present invention.

Fig. 4 is a view illustrating a configuration of a bogie of a railway vehicle to which the insulating rolling bearing of the present invention is applied.

Fig. 5 is a view illustrating a configuration of a traction motor.

Fig. 6 is an enlarged view illustrating a configuration at a fixed side around the rolling bearing.

Fig. 7 is an enlarged view illustrating a configuration at a free side around the rolling bearing.

Fig. 8 is a graph illustrating frequency characteristics of impedance.

MODE FOR CARRYING OUT THE INVENTION

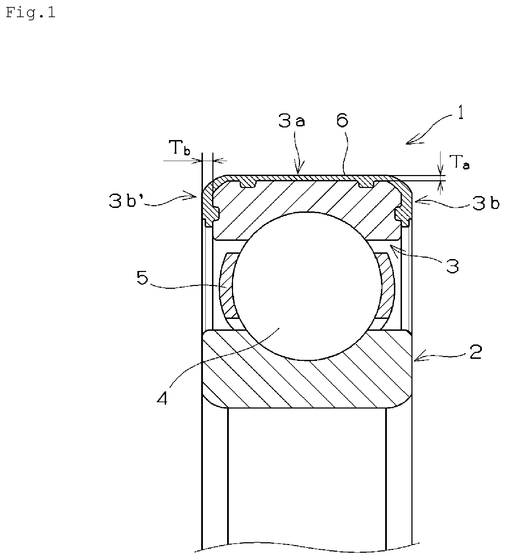

One example of an insulating rolling bearing of the present invention is described with reference to Fig. 1. Fig. 1 is a sectional view of a deep groove ball bearing. An insulating rolling bearing 1 includes an inner ring **2,** an outer ring **3,** and a plurality of balls (rolling elements) 4. The inner ring 2 has an inner ring raceway surface on an outer peripheral surface. The outer ring 3 has an outer ring raceway surface on an inner peripheral surface. The inner ring 2 and the outer ring 3 are disposed coaxially to each other. The balls 4 are disposed between the inner ring raceway surface and the outer ring raceway surface. The balls 4 are retained by a cage **5.**

Each of the inner ring 2, the outer ring 3, and the ball 4 may be formed of an iron-based material. Examples of the iron-based material include bearing steel such as SUJ2, carburized steel, carbon steel for mechanical structures, cold-rolled steel, and hot-rolled steel, used for rolling bearings.

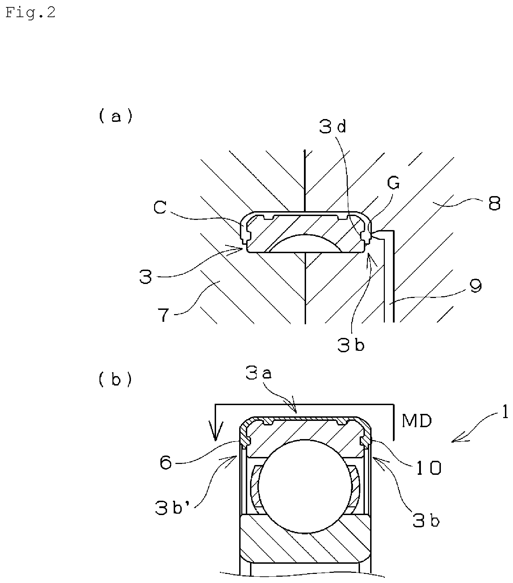

In the example shown in Fig. 1, an outer peripheral surface 3a and end surfaces 3b, 3b' of the outer ring 3 are coated with a resin film 6 serving as an insulating film. Double circumferential grooves are formed on the outer peripheral surface 3a of the outer ring 3. A circumferential groove is formed on each of the end surfaces 3b, 3b' of the outer ring 3. A portion of the resin film 6 is located in the circumferential grooves. As shown in Figs. 2(a) and 2(b), the resin film 6 is formed on the outer peripheral surface 3a and the axial end surfaces (end surfaces 3b, 3b') of the outer ring 3 by insert-molding a resin composition described below onto the outer ring 3.

As described above, a relation between the impedance Z, the insulation resistance R and the capacitance C of the insulating film of the insulating rolling bearing is represented by the following formula (1).

Math 4

$$Z = \frac{1}{\sqrt{\frac{1}{R^2} + (2\pi f C)^2}} \quad (1)$$

Z:    impedance ($\Omega$)
R:    insulation resistance ($\Omega$)
f:    frequency (Hz)
C:    capacitance (F)

Accordingly, it is necessary to increase the insulation resistance R of the insulating film or decrease the capacitance C of the insulating film to realize high impedance (high resistance) of the insulating rolling bearing in a higher frequency range.

Further, the capacitance C is represented by the following formula (3)

Math 5

$$C = \frac{\varepsilon_0 \varepsilon_s S}{d} \quad (3)$$

$\varepsilon_0$:    vacuum permittivity ($8.8542 \times 10^{-12}$ (F/m))
$\varepsilon_s$:    relative permittivity of the insulating film
S:    area ($m^2$)
d:    distance (m)

Accordingly, it is necessary to decrease the relative permittivity $\varepsilon_s$ of the insulating film or increase the film thickness of the insulating film in order to decrease the capacitance C of the insulating film of the insulating rolling bearing.

The insulating film of the insulating rolling bearing of the present invention has the insulation resistance of 2,000 MΩ or more and the capacitance of 10 nF or less. Accordingly, high impedance can be realized in the high frequency range, and thus superior electrolytic corrosion preventive performance can be realized. The insulating film has the insulation resistance of preferably 2,000-20,000 MΩ, more preferably 4, 000-18, 000 MΩ, further more preferably 6, 000-16, 000 MΩ from a viewpoint of realizing the high impedance and decreasing the cost. Further, the insulating film has the capacitance of preferably 1-10 nF, more preferably 1-8 nF, further more preferably 1-5 nF.

The film thicknesses $T_a$, $T_b$ of the insulating film (except the region of the circumferential groove, the same shall apply hereinafter) are not especially limited as long as the capacitance C is 10 nF or less. For example, the insulating film may be formed such that the film thickness $T_a$ of the insulating film formed on the outer peripheral surface 3a of the outer ring 3 and the film thickness $T_b$ of the insulating film formed on each of the end surfaces 3b, 3b' are substantially uniform. Further, the insulating film (the resin film 6 in Fig. 1) may be formed such that the film thickness $T_a$ of the insulating film formed on the outer peripheral surface 3a of the outer ring 3 is smaller than the film thickness $T_b$ of the insulating film formed on each of the end surfaces 3b, 3b'.

In a case in which the insulating film is a resin film, the film thickness is determined based on the insulating performance and the heat dissipating performance. In a case in which the film thickness of the resin film is large, the capacitance thereof is small (the impedance is large), while the heat dissipating performance is inferior. On the other hand, in a case in which the film thickness of the resin film is small, the heat dissipating performance is superior, while the capacitance thereof is large (the impedance is small). In addition, it might be difficult to form the resin film and to secure the mechanical strength of the resin film. Thus, considering the balance of the heat dissipating performance, the insulating performance and the mechanical strength, the film thickness of the resin film is, for example, 0.3-2 mm, preferably 0.3-1.5 mm. In particular, considering the heat dissipating performance, the film thickness is preferably 1 mm or less, may be 0.3-0.9 mm.

As the size of the bearing becomes large, the area of the raceway ring on which the insulating film is formed becomes large. As a result, the capacitance C of the insulating film becomes large based on the above-described formula (3), which impedes to realize the high impedance. Thus, in a case in which the size of the bearing is large (for example, the outer diameter of the bearing is 70 mm or more, preferably 90 mm or more), in order to secure the heat dissipating performance, it is preferable that the film thickness $T_a$ of the resin film formed on the peripheral surface (the inner peripheral surface and/or the outer peripheral surface), which largely affects the heat dissipating performance, is made thin, and further, in order to make the impedance C small, it is preferable that the film thickness $T_b$ of the resin film formed on the axial end surface (width surface) is set to be larger than the film thickness $T_a$. In this case, in the resin film, the ratio of the film thickness $T_a$ on the peripheral surface to the film thickness $T_b$ on the axial end surface is for example, a range between 1 : 1 and 1 : 3, preferably a range between 1 : 1.2 and 1 : 3, more preferably a range between 1 : 1.2 and 1 : **2.** Further, in this case, the film thickness $T_a$ on the peripheral surface is preferably 1 mm or less.

In the present invention, the resin film is not especially limited as long as the insulation resistance and the capacitance are within the above-described numeral ranges. The resin film is preferably formed by a resin composition containing PPS resin, in particular a resin composition containing the PPS resin, the glass fiber, an inorganic filler having the heat conductivity of 10 W/m·K or more, and a thermoplastic elastomer. The resin composition is described below.

The PPS resin is crystalline thermoplastic resin having a polymer structure in which benzene rings are linked by sulfides at the para-position. The PPS resin has the melting point of approximately 280 °C and the heat conductivity of approximately 0.3 W/m·K. The PPS resin is a kind of a so-called super engineering plastic having superior heat resistance, dimensional stability, chemical resistance and flame retardant.

There are several types of the PPS resin including a crosslinked type and a linear type defined by its molecular structure, and any type of the PPS resin may be employed regardless of the molecular structure and molecular weight thereof. The crosslinked type PPS resin is formed by, for example, performing a heat treatment in an oxygen atmosphere during a producing process to increase the molecular weight to the required level. The crosslinked type PPS resin has a two-dimensional or three-dimensional crosslinked structure in which a portion of the molecular is crosslinked by oxygen. The linear type PPS resin does not include the crosslinked structure in the molecular structure because the heat treatment is not performed during the producing process, and thus the molecular structure is a one-dimensional straight chain structure.

The content of the PPS resin is not especially limited. In a case in which the content of the PPS resin is much, superior flowability is realized, while the heat dissipating performance might be deteriorated. The content of the PPS resin relative to the whole of the resin composition is, for example, 20-70 mass%, preferably 29-50 mass%.

The glass fiber is formed by spinning inorganic glass containing $SiO_2$, $B_2O_3$, $Al_2O_3$, Cao, MgO, $Na_2O$, $K_2O$ or $Fe_2O_3$ as a main component. Generally, alkali-free glass (E glass), or alkali glass (C glass and A glass) may be employed.

The average fiber length of the glass fiber is not especially limited, but is preferably 0.1 mm or more, more preferably 0.2 mm or more. In a case in which the average fiber length is less than 0.1 mm, the reinforcing effect is small and the wear resistance is deteriorated. The upper limit of the average fiber length is, for example, 1 mm or less, may be 0.8 mm or less. The average fiber length in this disclosure is the number-average fiber length. Further, the average fiber diameter of the glass fiber is not especially limited, but is, for example, 5-20 $\mu$m, preferably 10-15 $\mu$m. The average fiber diameter may be measured using an electron microscope or an atomic force microscope generally used in this field. The average fiber diameter is calculated as a number-average fiber diameter based on the above-described measurement.

The content of the glass fiber is not especially limited. In a case in which the content of the glass fiber is much, superior mechanical strength is realized, while the flowability might be deteriorated. The content of the glass fiber relative to the whole of the resin composition is, for example, 10-50 mass%, preferably 10-30 mass%. In a case in which the content of the glass fiber is less than 10 mass%, the mechanical strength is hardly improved and thus the creep resistance might be deteriorated.

The inorganic filler having the heat conductivity of 10 W/m·K is compounded for mainly improving the heat conductivity of the resin film. Considering other properties (electrical insulation, water resistance, chemical resistance, heat resistance, hardness (attackability to mating material)) and commercial availability, the inorganic filler preferably employs at least one selected from the group of silicon carbide, beryllia, boron nitride, silicon nitride, magnesium hydroxide, alumina and magnesium carbonate. The heat conductivities of these materials are described below in Table **1.**

Table 1

| Inorganic filler | SiC | BeO | BN | $Si_3N_4$ | $Mg(OH)_2$ | $Al_2O_3$ | $MgCO_3$ |
|---|---|---|---|---|---|---|---|
| Heat conductivity (W/m·K) | 270 | 250 | 110 | 60 | 40 | 20 | 15 |

The heat conductivity of the inorganic filler is preferably 15 W/m·K or more. Further, it is preferable that the inorganic filler has superior electrical insulation. For example, the specific electrical resistance is preferably $10^{10}$ $\Omega$·cm or more, more preferably $10^{12}$ $\Omega$·cm or more.

The content of the inorganic filler is not especially limited. In a case in which the content of the inorganic filler is much, superior heat dissipating performance is realized, while the mechanical strength or the flowability might be deteriorated. The content of the inorganic filler relative to the whole of the resin composition is, for example, 10-50 mass%, preferably 30-50 mass%. In a case in which the content of the inorganic filler is less than 10 mass%, the effect based on the heat conductivity might be hardly obtained.

The thermoplastic elastomer employed in the resin composition is not especially limited, but preferably employs polyolefin elastomer, polystyrene elastomer, polyvinyl chloride elastomer, polyurethane elastomer, polyester elastomer, polyamide elastomer, polybutadiene elastomer, etc. each having the melting point lower than that of the PPS resin in order to improve the moldability. The thermoplastic elastomer may be employed by considering heat resistance, water resistance, chemical resistance, and commercial availability.

In a case in which the content of the thermoplastic elastomer is much, the flowability and the impact resistance of the resin composition are improved, however in a case in which the content of the thermoplastic elastomer is too much, the elastic modulus might be deteriorated. The content of the thermoplastic elastomer relative to the whole of the resin composition is, for example, 0.5-30 mass%, preferably 1-20 mass%, more preferably 1-10 mass%.

A well-known additive for resin may be compounded to the resin composition to such an extent that does not deteriorate the effect of the present invention. For example, the inorganic filler (except the glass fiber) having the heat conductivity of less than 10 W/m·K may be compounded to the resin composition.

The content of each of the above-described materials may be determined based on the moldability, the mechanical properties, etc. An especially preferable aspect of the resin composition employed in the present invention contains 29-50 mass% of the PPS resin, 20-70 mass% (preferably 40-70 mass%) of the total of the glass fiber and the inorganic filler having the heat conductivity of 10 W/m·K or more, and 1-10 mass% of the thermoplastic elastomer, relative to the whole of the resin composition. Both the heat dissipating performance and the mechanical strength can be easily realized by setting the total of the glass fiber and the inorganic filler. Further, the resin composition may preferably contain the inorganic filler more than the glass fiber and contain 10-30 mass% of the glass fiber and 30-50 mass% of the inorganic filler, relative to the whole of the resin composition. Further, the average fiber length of the glass fiber may be preferably 200 $\mu$m or more, and the average fiber diameter of the glass fiber may be preferably 10-15 $\mu$m.

After the materials that form the resin composition are mixed as needed using a Henschel mixer, a ball mixer, a ribbon blender or the like, the materials are melt-kneaded by a melt extruder such as a twin-screw melt extruder to obtain molding pellets. The molten resin is injection-molded onto the raceway ring (for example, the outer ring) using the molding pellets. For example, the injection molding is performed at a temperature of 300 °C or more.

The injection molding is described with reference to Figs. 2(a) and 2(b). Fig. 2(a) is a sectional view of a main portion of a molding die. Fig. 2(b) is a view for describing the insulating rolling bearing obtained by the method shown in Fig. 2(a).

In the example shown in Fig. 2(a), the molding die is formed by a movable side die plate 7 and a fixed side die plate 8. The movable side die plate 7 and the fixed side die plate 8 are engaged with each other in a state in which the raceway ring (the outer ring 3 in Fig. 2(a)) is disposed in the molding die so as to form a cavity C. The cavity C is shaped to correspond to the resin film 6 (see Fig. 1). Specifically, the cavity C includes a cavity formed at a side of the outer peripheral surface 3a of the outer ring 3 and cavities formed at sides of the end surfaces 3b, 3b' of the outer ring 3. The cavity C is connected to a runner 9 via a gate G. Fig. 2(a) shows a sectional view of a portion of the cavity C, and the cavity C is formed in a circular shape along the shape of the outer ring 3.

In the example shown in Fig. 2(a), the gate G is disposed to face the cavity at the side of the end surface 3b of the outer ring **3.** When the molten resin is poured from the gate G, the molten resin flows within the molding die as shown by an arrow MD in Fig. 2(b). Specifically, the molten resin is led to the cavity at the side of the end surface 3b' of the outer ring 3 from the cavity at the side of the end surface 3b of the outer ring 3 via the cavity at the side of the outer peripheral surface 3a of the outer ring **3.**

After filling the molten resin, the pressure is sustained and then the molten resin is cooled for a certain period to cure the resin. Thereafter, the molding die is opened to obtain the outer ring having the resin film 6 on the outer peripheral surface and both end surfaces. In this case, a gate mark 10 is formed on one axial end surface of the resin film 6.

In the insulating rolling bearing 1 shown in Fig. 2(b), a flowing direction (MD) of the resin in the resin film 6 is continuously directed along the one axial end surface to the other axial end surface via the outer peripheral surface on the whole circumference of the outer ring **3.** In this case, the flowing direction (MD) of the resin in the resin film 6 formed on the outer ring 3 is on one straight line from the width surface to the other width surface via the outer peripheral surface.

In the example shown in Figs. 2(a) and 2(b), a gate type is a disc gate. Unlike a pin gate (that is distributed on the circumference), the disc gate is continuous on the circumference. Thus, the molten resin flows in the same direction from the one axial end surface to the other axial end surface. Accordingly, a weak weld portion is not formed.

In the injection molding, the position of the gate is not especially limited, but is preferably disposed to form the flowing direction (MD) of the resin in the resin film as shown in Fig. 2(b). As a specific position of the gate, for example as shown in Fig. 2(a), the gate G may be disposed to face the circumferential groove 3d of the end surface 3b of the outer ring 3.

Further, in the example shown in Fig. 2(a), the gate G is disposed such that a direction where the molten resin is poured from the gate G conforms to the axial direction of the cavity C, however these directions may be different from each other. For example, the direction where the molten resin is poured from the gate G may be inclined to the axial direction of the cavity C at a specified angle or orthogonal to the axial direction of the cavity C.

In the example shown in Figs. 2(a) and 2(b), polishing is performed as needed on the outer peripheral surface and the width surface of the resin film after the injection molding, so as to be finished in a desired size and accuracy, so that the insulating rolling bearing is obtained.

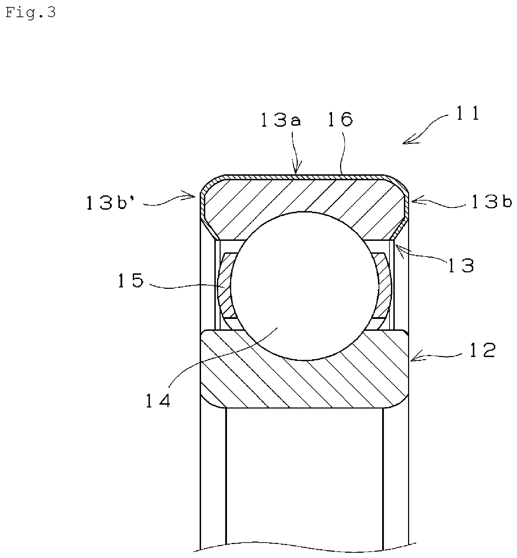

Another example of the insulating rolling bearing of the present invention is described with reference to Fig. 3. An insulating rolling bearing 11 shown in Fig. 3 includes a ceramics film 16 as an insulating film, instead of the above-described resin film.

As shown in Fig. 3, the insulating rolling bearing 11 includes an inner ring 12, an outer ring 13, and a plurality of balls 14. The inner ring 12 has an inner ring raceway surface on an outer peripheral surface. The outer ring 13 has an outer ring raceway surface on an inner peripheral surface. The inner ring 12 and the outer ring 13 are disposed coaxially to each other. The balls 14 are disposed between the inner ring raceway surface and the outer ring raceway surface. The balls 14 are retained by a cage 15. In the example shown in Fig. 3, an outer peripheral surface 13a and both end surfaces 13b, 13b' of the outer ring 13 are coated with the ceramics film 16. An inner diametrical portion of each of the end surfaces 13b, 13b' of the outer ring 13 is formed in a tapered shape. The ceramics film 16 is also formed on the tapered portion. The tapered portion is formed such that the length in the axial direction becomes shorter toward the inner diametrical side.

In the example shown in Fig. 3, a circumferential groove is not formed on the outer peripheral surface 13a and the end surfaces 13b, 13b' of the outer ring 13. The ceramics film 16 is formed such that the film thickness of the ceramics film 16 formed on the outer peripheral surface 13a of the outer ring 13 and the film thickness $T_b$ of the ceramics film 16 formed on each of the end surfaces 13b, 13b' are substantially uniform.

In the example shown in Fig. 3, the ceramics film 16 of the insulating rolling bearing 11 has the insulation resistance of 2,000 M$\Omega$ or more and the capacitance of 10 nF or less, which is similar to the above-described resin film.

Here, in a case in which the film thickness of the ceramics film is set to be large, the insulation resistance is normally tend to be large and the capacitance is normally tend to be small. In a case in which the ceramics film is, for example, a thermal spraying layer, in order to set the film thickness of the ceramics film to be large, the thermal spraying time becomes longer and thus the producing cost might increase. Further, the thermal spraying layer having a large film thickness might be damaged when engaging with the mating surface (its reliability might be deteriorated).

In the present invention, from a view point of realizing high impedance, the film thickness of the ceramics film is preferably 0.1 mm or more and may be more than 0.7 mm. Further, from a viewpoint of realizing both high impedance and superior reliability, the film thickness is preferably 0.1-1.0 mm, more preferably 0.1-0.9 mm. With this, the capacitance can be decreased and further higher impedance can be realized while securing the reliability and decreasing the cost.

In a case in which the ceramics film is a thermal spraying layer, a sealing treatment using the resin may be performed to the ceramics film to form an insulating film. In this case, for example, a possibility of the damage caused when engaging can be decreased while setting the film thickness of the film to be large, and thus the film thickness of the film can be easily set to more than 0.1 mm.

Since the ceramics film has superior heat dissipating performance compared to that of the resin film, so that the film thickness of a portion of the ceramics film formed on the peripheral surface may be substantially identical to the film thickness of a portion of the ceramics film formed on the axial end surface (width surface). In the ceramics film, it is preferable that the film thickness on the peripheral surface is the same as the film thickness on the axial end surface, from a viewpoint of simplifying the producing process.

Examples of the base material of the ceramics film include metal oxide such as alumina, magnesia, zirconia and titania, silicon nitride, silicon carbide, and a mixture thereof. The main component of the ceramics film is preferably alumina. For example, the composition of the thermal spraying material may contain 95.0-98.5 mass% of alumina and 1.5-5.0 mass% of the other metal oxide, or alternatively 97.0 mass% or more of alumina and 1.5-2.5 mass% of the metal oxide such as zirconia.

The ceramics film may be formed by a plasma thermal spraying method, an aerosol deposition (hereinafter, referred to as AD) method, etc. In a case in which the ceramics film is formed by the plasma thermal spraying method, since porous film is tend to be formed, it is preferable that the sealing treatment using the resin is performed to the thermal spraying layer from a viewpoint of improving the insulating performance. The film formed by the plasma thermal spraying method can decrease the effective relative permittivity and is suitable to high impedance because pores in the porous film are filled with a resin material having relatively low permittivity and independent pore is formed.

The AD method in this disclosure is configured to spray aerosol, which is fine particles of raw-material ceramics dispersed into gas, toward a sleeve body as a base material from an aerosol spray nozzle, to collide the aerosol with the surface of the base material at high speed and to form a film of the composition material of the fine particle on the base material. The fine particles of the ceramics are retained in a dispersed state in the aerosol in forming the film by the AD method. The film formed by the AD method is formed from the fine particles dispersed into the aerosol as described above, so that the obtained film is dense film having especially superior heat dissipating performance.

The ceramics film may be laminated as a film layer having two layers or more. The film may be laminated by, for example, repeating the plasma thermal spraying method or the AD method, or alternatively by combining both methods (for example, a first layer may be formed by the AD method and the second layer may be formed by the plasma thermal spraying method).

As described above, in the present invention, the insulating film may employ the resin film or the ceramics film. Here, for example, the relative permittivity of the PPS resin employed in the resin film is approximately 4, and the relative permittivity of the alumina employed in the ceramics film is approximately 10. In order to realize the high impedance, it is preferable to set the relative permittivity of the insulating resin to be small for decreasing the capacitance C of the insulating film, and thus the PPS resin is preferable on this viewpoint. In a case in which the ceramics film is employed, the film thickness may be made large.

In particular, in the insulating rolling bearing of the present invention, it is preferable that appropriate materials and/or appropriate film thickness of the insulating film are set based on the usage or the needs of the insulating film for realizing the capacitance C of the insulating film within 1-5 nF.

The configuration of the insulating rolling bearing of the present invention is not limited to the examples shown in Figs. 1 to **3.** For example, the insulating rolling bearing of the present invention may be applied to a cylindrical roller bearing, a tapered roller bearing, a self-aligning roller bearing, a needle roller bearing, a thrust cylindrical roller bearing, a thrust tapered roller bearing, a thrust needle roller bearing, or a thrust self-aligning roller bearing.

Each of the insulating rolling bearings shown in Figs. 1 to 3 employs the configuration in which the insulating film is formed on the outer peripheral surface and the both end surfaces of the outer ring, however the configuration thereof is not limited thereto. For example, a configuration in which the insulating film is formed only on the outer peripheral surface of the outer ring may be employed. Further, the raceway ring on which the insulating film is formed is not limited to the outer ring and thus may be the inner ring. In this case, the above-described insulating film is formed on at least the inner peripheral surface of the inner ring.

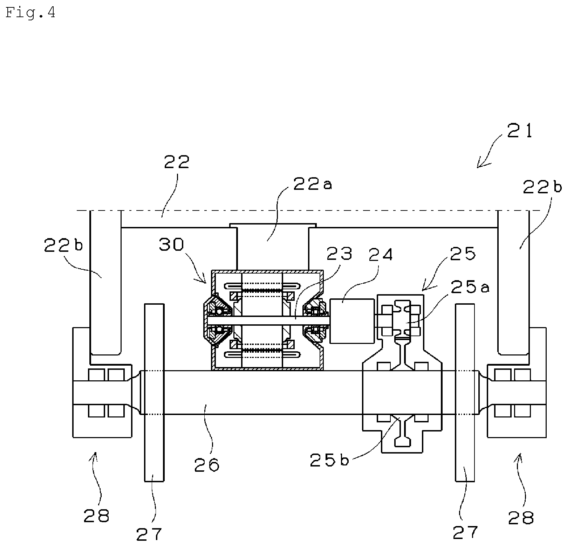

Next, an example to which the insulating rolling bearing of the present invention is applied is described. Figs. 4 to 7 show an example of the insulating rolling bearing applied to a bearing that rotatably supports a main shaft of a traction motor for railway vehicles.

First, a configuration of a bogie of a railway vehicle having a support structure for a main shaft of a traction motor is described with reference to Fig. 4. Fig. 4 shows the configuration of the bogie. As shown in Fig. 4, a bogie 21 to be installed in a railway vehicle includes a bogie main part 22, a traction motor 30, a coupling 24, a driving device 25, an axle 26, a wheel 27, and an axle bearing device 28. The traction motor 30 is supported by the bogie main part 22 in a traction motor mounting part 22a. Further, a main shaft 23 of the traction motor 30 is coupled to the driving device 25 via the coupling 24. The driving device 25 includes a small gear 25a fixed to the main shaft 23, and a large gear 25b fixed to the axle 26. The small gear 25a and the large gear 25b are disposed to mesh with each other. A pair of the wheels 27 is fixed to the axle 26. Both ends of the axle 26 are supported by the bogie main part 22 using the axle bearing device 28. Further, the axle bearing device 28 is supported by the bogie main part 22 on a bogie frame 22b.

An operation of the wheel 27 driven by the traction motor 30 is described with reference to Fig. 4. First, the traction motor 30 is driven to rotate the main shaft 23. At this time, the rotation of the main shaft 23 is transmitted to the driving device 25 via the coupling 24 to rotate the small gear 25a fixed to the main shaft 23. The large gear 25b meshed with the small gear 25a is rotated by the rotation of the small gear 25a. When the axle 26 fixed to the large gear 25b is rotated, the wheels 27 fixed to both ends of the axle 26 are rotated, so that the bogie 21 travels.

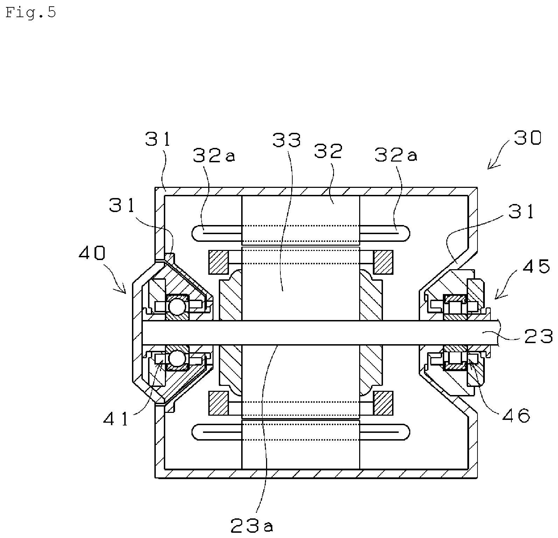

Fig. 5 shows a configuration of the traction motor 30. As shown in Fig. 5, the traction motor 30 mainly includes a stator 32 having a coil 32a, a rotor 33 disposed to face the stator 32, and a frame 31 disposed to surround the stator 32 and the rotor 33. The main shaft 23 is fixed to penetrate a portion including a center part (rotational axis) of the rotor 33. In the traction motor 30, firstly, three-phase alternate electric current is supplied to the coil 32a of the stator 32. At this time, a rotational magnetic field is generated around the rotor 33, which generates the inductive electric current in the rotor 33. In this manner, when the rotational magnetic field is generated around the rotor 33 and the inductive electric current is generated in the rotor 33, the electromagnetic force for rotating the rotor 33 around the rotational axis is generated to rotate the rotor 33. The rotation of the rotor 33 is extracted to the outside via the main shaft 23.

The traction motor 30 further includes a first bearing device 40 and a second bearing device 45 each rotatably supporting the main shaft 23 around an axis relative to a component disposed to face the outer peripheral surface 23a of the main shaft 23. The first bearing device 40 includes a first rolling bearing (deep groove ball bearing) 41 that supports a fixed side of the main shaft 23. The second bearing device 45 includes a second rolling bearing (cylindrical roller bearing) 46 that supports a free side of the main shaft 23. Each of the rolling bearings supports the main shaft 23 and the rotor 33 of the traction motor 30 and receives a load caused by the dead weight of the rotor 33. Each of the first rolling bearing 41 and the second rolling bearing 46 corresponds to the insulating rolling bearing of the present invention. Each of the rolling bearings is also referred to as a traction motor bearing.

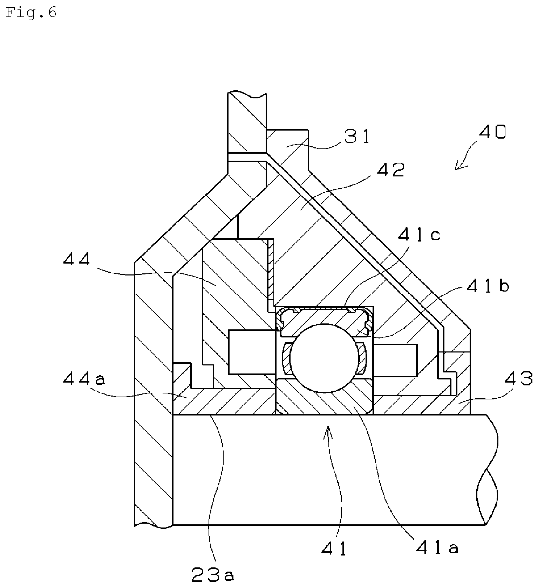

Fig. 6 is an enlarged view illustrating a configuration of the first bearing device 40. As shown in Fig. 6, the first bearing device 40 includes the first rolling bearing 41, a housing 42, a stopper 43, an end lid 44 and a slinger 44a. An inner ring 41a of the first rolling bearing 41 is interposed between the stopper 43 and the slinger 44a such that an inner peripheral surface of the inner ring 41a is in contact with the outer peripheral surface 23a of the main shaft 23. Further, an outer peripheral surface of an outer ring 41b is fixed to the housing 42 via a resin film 41c. For example, the inner ring 41a is used for the interference fit to the main shaft 23, and the outer ring is used for the transition fit to the housing 42. Further, both end surfaces of the outer ring 41b are pressed by the housing component (the housing 42 and the end lid 44) via the resin film 41c to be axially fixed.

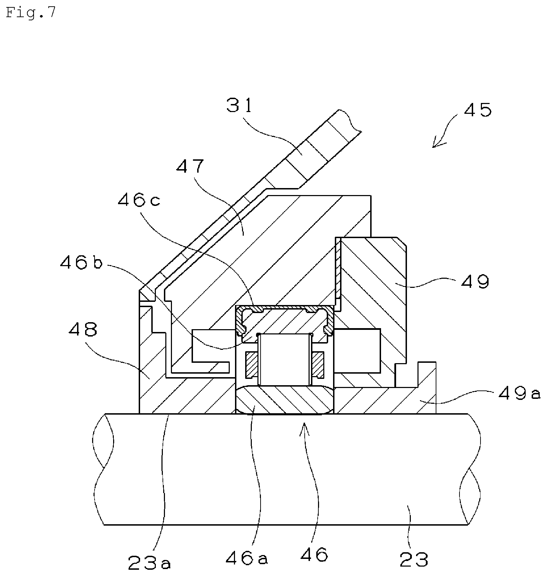

Fig. 7 is an enlarged view illustrating a configuration of the second bearing device 45. The configuration of the second bearing device 45 is similar to that of the first bearing device 40 except the type of the rolling bearing.

In the examples shown in Fig. 6, the first rolling bearing 41 is formed as an open-type bearing in which a bearing space between the inner ring 41a and the outer ring 41b is not sealed by a sealing member, and a lubricant (lubricating oil or grease) is supplied to the bearing space, so that the lubricant lubricates the bearing via the raceway surface. However, the first rolling bearing 41 may employ a bearing that seals the lubricant using the sealing member. When the bearing rotates, the grease generates heat by the friction between the rolling element and the raceway surface or the cage and by the resistance of the grease to stirring, and thus the grease becomes high in temperature. The grease normally used in the traction motor bearing may be employed without restriction.

Generally, the traction motor bearing is subjected to a maintenance operation such as a replacement of the grease or an inspection of a state of the grease in accordance with a periodic inspection of the railway vehicle. The required frequency of the maintenance operation of the traction motor bearing is one of the dominant factors of the required frequency of the maintenance operation of the traction motor or the railway vehicle. The required frequency of the maintenance operation of the traction motor bearing is determined by the lubricating lifetime of the grease. The deterioration of the grease proceeds by the oxidation of the base oil, and thus the lubricating lifetime of the grease becomes generally longer as the temperature of the bearing is lower. Accordingly, in order to decrease the frequency of the maintenance operation of the traction motor and decrease the maintenance cost, it is necessary to decrease the temperature of the bearing. Further, when the leaked voltage is applied to the traction motor bearing in use, the damage due to the electrolytic corrosion might be caused in the traction motor bearing.

As shown in Figs. 4 to 7, in a case in which the insulating rolling bearing of the present invention is applied to the traction motor bearing, the generated heat can be dissipated via the housing component even when the temperature of the bearing increases due to the high speed rotation. Thus, the film thickness of the insulating film can be made large while suppressing the increase of the temperature of the bearing. As a result, high impedance can be realized and especially superior preventive performance against the electrolytic corrosion due to the energizing can be realized.

EXAMPLE

The frequency characteristics of the impedance were measured using the outer rings of the four insulating rolling bearings including the insulating films having different materials and different film thicknesses.

In a case in which the insulating film is a ceramics film, the film is formed by the thermal spraying using the thermal spraying material containing 95.0-98.5 mass% of alumina and 1.5-5.0 mass% of the other metal oxide. Further, in a case in which the insulating film is another ceramics film, the thermal spraying material containing 97.0 mass% or more of alumina and 1.5-2.5 mass% of the metal oxide such as zirconia is employed. The film thickness of the insulating film is 0.1-1.0 mm.

In a case in which the insulating film is a resin film, the resin film contains 40-70 mass% of the total content of the glass fiber and the inorganic filler having the heat conductivity of 10 W/m·K or more relative to the whole of the resin composition of the resin film. The resin composition contains the inorganic filler more than the glass fiber, 10-30 mass% of the glass fiber, and 30-50 mass% of the inorganic filler. The resin film is formed by injection-molding the resin composition further containing the thermoplastic elastomer. The film thickness of the resin film is 0.3-2.0 mm. The measured insulating film in the insulating rolling bearing has the insulation resistance of 2,000 MΩ or more, and the capacitance of 10 nF or less. The electrolytic corrosion can be prevented in the actual vehicle by fulfilling the above-described numeral ranges.

The impedance Z is measured from the phase difference between the current waveform and the voltage waveform under a measurement condition of load voltage of 1 V using the LCR meter after the bearing outer ring is assembled to a jig such that the whole peripheral surface of the bearing outer ring is in contact with the jig.

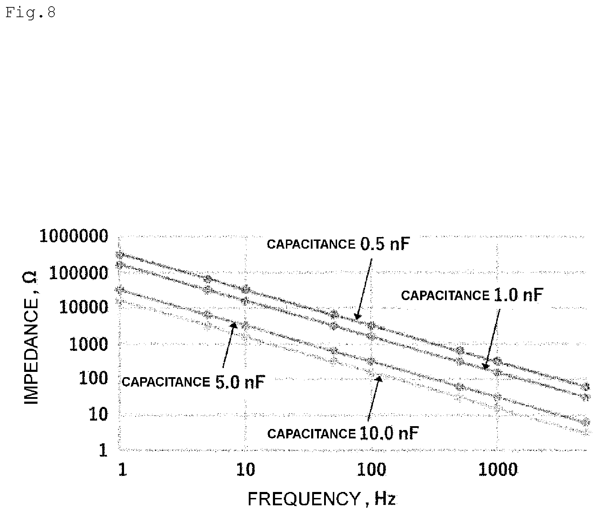

The capacitances of the four insulating films are 0.5 nF, 1.0 nF, 5.0 nF and 10.0 nF, respectively. Fig. 8 shows the frequency characteristics of the impedance of these samples. As shown in Fig. 8, in a case in which the capacitance is 10.0 nF or less, for example, the impedance becomes more than 10 Ω even in a high frequency of 1,000 Hz. Thus, the insulating rolling bearing of the present invention can sufficiently secure the insulating performance even in the high performance traction motor that drives at a high frequency.

INDUSTRIAL APPLICABILITY

The insulating rolling bearing of the present invention has the electrical insulation due to the insulating film and thus shows superior electrolytic corrosion preventive performance. Thus, the insulating rolling bearing can be applied to various rolling bearings used in a device having a structure in which electric current flows in the bearing. In particular, the insulating rolling bearing is suitable to a rolling bearing used in a support structure for the traction motor main shaft of the railway vehicle.

REFERENCE SIGNS LIST

1: insulating rolling bearing
2: inner ring
3: outer ring
4: ball (rolling element)
5: cage
6: resin film
7: movable side die plate
8: fixed side die plate
9: runner
10: gate mark
11: insulating rolling bearing
12: inner ring
13: outer ring
14: ball (rolling element)
15: cage
16: ceramics film
21: bogie
22: bogie main part
23: main shaft
24: coupling
25: driving device
26: axle

27: wheel
28: axle bearing device
30: traction motor
31: frame
32: stator
33: rotor
40: first bearing device
41: first rolling bearing
42: housing
43: stopper
44: end lid
45: second bearing device
46: second rolling bearing
47: housing
48: stopper
49: end lid
C: cavity
G: gate

**Claims**

1. An insulating rolling bearing comprising:

    an inner ring;
    an outer ring;
    a raceway surface that is formed on each of an outer peripheral surface of the inner ring and an inner peripheral surface of the outer ring;
    rolling elements that are interposed between the raceway surfaces; and
    an insulating film that is formed of a resin film or a ceramics film, the insulating film being formed on at least one peripheral surface selected from the group of an inner peripheral surface of the inner ring and an outer peripheral surface of the outer ring,
    wherein:
    the insulating film of the insulating rolling bearing has the insulation resistance of **2,000** MΩ or more and the capacitance of 10 nF or less.

2. The insulating rolling bearing as defined in claim **1,** wherein:

    the insulating film is formed of the resin film, and
    the resin film is formed of a resin composition that contains a polyphenylene sulfide resin, a glass fiber, an inorganic filler having the heat conductivity of 10 W/m·K or more, and a thermoplastic elastomer.

3. The insulating rolling bearing as defined in claim **2,** wherein the content of the thermoplastic elastomer is 1-10 mass% relative to the whole of the resin composition.

4. The insulating rolling bearing as defined in claim **2,** wherein:

    the content of the total of the glass fiber and the inorganic filler is 40-70 mass% relative to the whole of the resin composition, and
    the resin composition contains the inorganic filler more than the glass fiber, and 10-30 mass% of the glass fiber and 30-50 mass% of the inorganic filler relative to the whole of the resin composition.

5. The insulating rolling bearing as defined in claim **2,** wherein the inorganic filler is at least one selected from the group of silicon carbide, beryllia, boron nitride, silicon nitride, magnesium hydroxide, alumina, and magnesium carbonate.

6. The insulating rolling bearing as defined in claim **1,** wherein:

    the insulating film is formed of the resin film,
    the resin film is formed of a resin composition that contains a polyphenylene sulfide resin, a glass fiber, an inorganic filler having the heat conductivity of 10 W/m·K or more, and a thermoplastic elastomer,
the content of the thermoplastic elastomer is 1-10 mass% relative to the whole of the resin composition,
the content of the total of the glass fiber and the inorganic filler is 40-70 mass% relative to the whole of the resin composition,
the resin composition contains the inorganic filler more than the glass fiber, and 10-30 mass% of the glass fiber and 30-50 mass% of the inorganic filler relative to the whole of the resin composition, and
the inorganic filler is at least one selected from the group of silicon carbide, beryllia, boron nitride, silicon nitride, magnesium hydroxide, alumina, and magnesium carbonate.

7.  The insulating rolling bearing as defined in claim **2,** wherein:

    the resin film is formed on the peripheral surface and both axial end surfaces of a raceway ring,
    the film thickness of the resin film on the peripheral surface is 1 mm or less, and
    a ratio of the film thickness of the resin film on the peripheral surface to the film thickness of the resin film on the axial end surface is in a range between 1 : 1 and 1 : 3.

8.  The insulating rolling bearing as defined in claim 2, wherein a flowing direction of a resin in the resin film is directed along one side to the other side in an axial direction of the peripheral surface on the whole circumference of a raceway ring.

9.  The insulating rolling bearing as defined in claim 1, wherein:

    the insulating film includes a ceramics film, and
    the film thickness of the insulating film is 0.1-1.0 mm.

10. The insulating rolling bearing as defined in claim 1, wherein the insulating rolling bearing is configured as a bearing that rotatably supports a main shaft of a traction motor of a railway vehicle.

Fig.1

Fig.2

(a)

(b)

Fig.3

Fig.4

Fig.5

Fig.6

Fig.7

Fig.8

# EP 4 596 911 A1

## INTERNATIONAL SEARCH REPORT

International application No.

**PCT/JP2023/035125**

| A. | CLASSIFICATION OF SUBJECT MATTER |
|---|---|

*F16C 33/62*(2006.01)i; *F16C 19/06*(2006.01)i; *F16C 19/26*(2006.01)i
FI:    F16C33/62; F16C19/06; F16C19/26

According to International Patent Classification (IPC) or to both national classification and IPC

| B. | FIELDS SEARCHED |
|---|---|

Minimum documentation searched (classification system followed by classification symbols)

F16C33/62; F16C19/06; F16C19/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2007-333031 A (NSK LTD) 27 December 2007 (2007-12-27)<br>        paragraphs [0001], [0023]-[0026], fig. 1 | 1, 9-10 |
| X | JP 06-229425 A (NSK LTD) 16 August 1994 (1994-08-16)<br>        paragraphs [0002], [0016]-[0024], [0028], fig. 1-2 | 1, 10 |
| Y |  | 2-8 |
| Y | JP 2005-140168 A (NSK LTD) 02 June 2005 (2005-06-02)<br>        paragraphs [0002], [0006]-[0015], [0018], fig. 1 | 2-8 |
| Y | JP 2002-286042 A (NSK LTD) 03 October 2002 (2002-10-03)<br>        paragraphs [0002], [0039]-[0051], fig. 1-4 | 8 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/035125**

| Patent document cited in search report | | | Publication date (day/month/year) | Patent family member(s) | Publication date (day/month/year) |
|---|---|---|---|---|---|
| JP | 2007-333031 | A | 27 December 2007 | US 2009/0304318 A1 paragraphs [0001], [0243]-[0246], fig. 8 EP 1950436 A1 CN 101228362 A | |
| JP | 06-229425 | A | 16 August 1994 | (Family: none) | |
| JP | 2005-140168 | A | 02 June 2005 | (Family: none) | |
| JP | 2002-286042 | A | 03 October 2002 | (Family: none) | |

Form PCT/ISA/210 (patent family annex) (January 2015)

**EP 4 596 911 A1**

**REFERENCES CITED IN THE DESCRIPTION**

**Patent documents cited in the description**

- JP 2004218846 A
- JP 2007333031 A